# EUROPÄISCHE PATENTSCHRIFT

(11) **EP 3 227 713 B1**
(45) Veröffentlichungstag und Bekanntmachung des Hinweises auf die Patenterteilung: **31.07.2019**
(21) Anmeldenummer: 15801119.7
(22) Anmeldetag: 21.11.2015
(51) Int. Cl.: G01S 7/40, G01S 13/93, G01S 13/86

(54) **VERFAHREN ZUR EIGENDIAGNOSE EINES UMGEBUNGSSENSORS EINES KRAFTFAHRZEUGS UND KRAFTFAHRZEUG**
METHOD FOR SELF-DIAGNOSIS OF AN AMBIENT SENSOR ON A MOTOR VEHICLE, AND MOTOR VEHICLE
PROCÉDÉ D'AUTO-DIAGNOSTIC D'UN CAPTEUR ENVIRONNEMENTAL D'UN VÉHICULE AUTOMOBILE ET VÉHICULE AUTOMOBILE

(30) Priorität: 04.12.2014 DE 102014017912
(43) Veröffentlichungstag der Anmeldung: 11.10.2017
(73) Patentinhaber: Audi AG, 85045 Ingolstadt (DE)
(72) Erfinder: STÜMPER, Stefan, 85072 Eichstätt (DE)
(74) Vertreter: Thielmann, Frank
(86) Internationale Anmeldenummer: PCT/EP2015/002343
(87) Internationale Veröffentlichungsnummer: WO 2016/087027

(56) Entgegenhaltungen:
- DE-A1-102004 052 619
- DE-T2- 60 016 986
- US-A1- 2010 076 710

## Beschreibung

Die Erfindung betrifft ein Verfahren zur Eigendiagnose eines Umgebungssensors eines Kraftfahrzeugs während dessen Betrieb, wobei von dem Sensor aufgenommene Sensordaten gegen wenigstens ein eine korrekte Funktionsweise anzeigendes, wenigstens einen Schwellwert verwendendes Überprüfungskriterium geprüft werden. Daneben betrifft die Erfindung ein Kraftfahrzeug.

In modernen Kraftfahrzeugen werden immer häufiger verschiedene Arten von Umgebungssensoren eingesetzt, die Sensordaten, die die Umgebung des Kraftfahrzeugs beschreiben, liefern. Beispiele für derartige Umgebungssensoren sind Kameras, Radarsensoren, Ultraschallsensoren und dergleichen. Die Sensordaten werden beispielsweise durch Fahrzeugsysteme, insbesondere Fahrerassistenzsysteme, genutzt, um ihre Funktionen durchführen zu können. Insbesondere dann, wenn die Fahrzeugsysteme zur wenigstens teilweise automatischen Längs- und/oder Querführung des Kraftfahrzeugs ausgebildet sein sollen, ist es wichtig, sicherzustellen, dass die Umgebungssensoren funktionsfähig sind und die notwendigen Informationen liefern. Hierfür sind gezielte Diagnoseanfragen/Diagnosevorgänge bekannt, wobei nicht alle Fehler durch einfaches Abfragen von aktuellen Parametern des Umgebungssensors festgestellt werden können.

Daher wurden zumindest für einige Umgebungssensoren Strategien zur Eigendiagnose anhand der aufgenommenen Sensordaten vorgeschlagen, die letztlich die Plausibilität der Sensordaten, insbesondere über einen Zeitraum, überprüfen. So wird bei Radarsensoren erwartet, dass (relevante) Objekte regelmäßige detektiert werden. Liegt für eine Zeitspanne einer vorbestimmten Länge keine Detektion eines (relevanten) Objektes vor, während das Kraftfahrzeug normal betrieben wird, kann davon ausgegangen werden, dass der Radarsensor defekt ist. So werden Radarsensoren meist genutzt, um metallische Gegenstände um das Kraftfahrzeug herum als relevante Objekte zu detektieren, die über einen entsprechenden Schwellwertbereich, was die Reflexionseigenschaften angeht, ausgewählt werden können. Metallische Gegenstände, beispielsweise Leitplanken, andere Kraftfahrzeuge, Laternenmäste und dergleichen werden im normalen Fahrbetrieb regelmäßig erwartet, so dass es beispielsweise als auf eine Fehlfunktion des Radarsensors hindeutend aufgefasst werden kann, wenn für 30 Minuten oder eine Stunde keine derartigen (relevanten) Objekte detektiert wurden.

Die Fragestellung, ob innerhalb eines durch die Zeitspanne definierten Zeitfensters ein (relevantes) Objekt detektiert wurde, ist ein Überprüfungskriterium, bei dem die Zeitspanne letztlich einen Schwellwert darstellt. Das Überprüfungskriterium kann insbesondere dadurch realisiert werden, dass die Zeit ab dem letzten detektierten (relevanten) Objekt vermessen wird. Überschreitet sie die Länge der vorbestimmten Zeitspanne, wird der Radarsensor als defekt markiert. Auch die auf die Reflexionseigenschaften bezogenen Schwellwerte können als vorbestimmte Schwellwerte des Überprüfungskriteriums angesehen werden. Auch für andere Arten von Umgebungssensoren sind derartige Eigendiagnoseverfahren, bei denen die Sensordaten gegen ein Überprüfungskriterium mit wenigstens einem Schwellwert überprüft werden, denkbar.

Es existieren jedoch auch Szenarien, in denen die Erfüllung des Überprüfungskriteriums mit fest vorgegebenen Schwellwerten der durchfahrenen Umgebung geschuldet ist. Beispielsweise existieren außerorts Straßen, die wenig befahren sind und durch ihre einfache Konstruktion ohne Leitplanken und Beleuchtung dazu führen können, dass die Selbstdiagnose greift und das Überprüfungskriterium trotz intakten Sensor einen Defekt feststellt. Vom Umgebungssensor abhängige Funktionen sind dann nicht mehr verfügbar und es entstehen aufgrund des Werkstattaufenthalts unnötige Kosten. Für Radarsensoren sind betroffene Funktionen bzw. Fahrerassistenzsysteme beispielsweise Notbremsassistenten, ACC-Systeme, Spurwechselassistenten und dergleichen.

DE 600 16 986 T2 betrifft ein Verfahren und ein Gerät zur Fehlerdetektion eines Radargeräts mittels Bewegungsdistanz. Ein Fehlerbestimmungsabschnitt bestimmt, ob ein beliebiger Fehler in der Radarvorrichtung aufgetreten ist, auf Grundlage der Bewegungsstreckeninformation von der Streckenerfassungsschaltung und der durch den Prozessor berechneten Erfassungsinformation des Erfassungsobjekts. Ein Zähler ist vorgesehen, der die Bewegungsstrecke zählt. Ist kein Zustand vorhanden, der auf einen Fehler hindeutet, wird der Zähler zurückgesetzt, ansonsten wird bei Überschreitung einer vorgewählten Fehlerbestimmungsstrecke ein Fehler festgestellt. Die vorgewählte Fehlerbestimmungsstrecke ist nicht auf eins beschränkt, sondern es kann auch eine Mehrzahl von Fehlerbestimmungsstrecken durch Verwendung eines Schalters eingestellt werden.

Der Erfindung liegt daher die Aufgabe zugrunde, ein verlässlicheres Verfahren zur Eigendiagnose von Umgebungssensoren anhand der aufgenommenen Sensordaten anzugeben.

Zur Lösung dieser Aufgabe sind bei einem Verfahren der eingangs genannten Art erfindungsgemäß die Merkmale des Anspruchs 1 vorgesehen.

Die Erfindung schlägt also vor, die Eigendiagnosefunktionalitäten abhängig von dem aktuellen Ort des Kraftfahrzeugs, beschrieben anhand einer Positionsinformation, dynamisch zu parametrieren bzw. auch das Durchführen der Eigendiagnose von der Umgebung abhängig zu machen, die das Kraftfahrzeug gerade durchfährt. Auf diese Weise ist die Eigendiagnosefunktion aufgrund der eigenen Sensordaten verlässlicher, so dass Fehlmeldungen eines Defekts aufgrund von irrtümlicherweise erfüllten Überprüfungskriterien vermieden werden können. Damit fallen auch Kosten weg, die derartige falsche Defektmeldungen mit sich brächten. Das unnötige Deaktivieren von Funktionen, insbesondere auch sicherheitsrelevanten Funktionen, kann ebenso entfallen. Jedoch bleibt die Detektionsleistung für tatsächliche Defekte des Umgebungssensors unverändert.

Dabei wird erfindungsgemäß durch einen Ortssensor eines globalen Navigationssatellitensystems (GNSS) eine Ortsangabe ermittelt, wobei die Positionsinformation aus in dem Kraftfahrzeug vorliegendem digitalen Kartenmaterial, insbesondere eines Navigationssystems, unter Verwendung der Ortsangabe abgeleitet wird. Es kann mithin ein GNSS-Sensor, beispielsweise ein GPS-Sensor, eingesetzt werden, um die aktuellen geodätischen Koordinaten des Kraftfahrzeugs als Ortsangaben in Erfahrung zu bringen. Diese Ortsangabe kann dann genutzt werden, um aus digitalem Kartenmaterial, welches beispielsweise in einem Navigationssystem vorliegt, Schlussfolgerungen über die Umgebung des Kraftfahrzeugs am aktuellen Ort zu ziehen. Mit anderen Worten können zur Navigation eingesetzte digitale Kartendaten sowie eine GPS-Ortsangabe genutzt werden, um als Positionsinformation eine Beschreibung der aktuellen Umgebung abzuleiten, insbesondere, um diese in Klassen einzuteilen, die eine adaptive Anpassung des Überprüfungskriteriums bzw. einer Entscheidung zu dessen Deaktivierung erlauben.

Dabei kann beispielsweise vorgesehen sein, dass an bestimmten Orten zu verwendende Schwellwerte und/oder Deaktivierungseigenschaften in dem digitalen Kartenmaterial, insbesondere Straßenabschnitten und/oder Bereichen zugeordnet, gespeichert sind. In diesem Fall wäre das digitale Kartenmaterial mithin um weitere Attribute zu ergänzen, die unmittelbar Schwellwerte angeben, die in Überprüfungskriterien einzusetzen sind. Nachdem dies allerdings eine relativ aufwendige Erweiterung von digitalen Kartendaten des digitalen Kartenmaterials erfordert, ist diese Ausgestaltung weniger bevorzugt, insbesondere im Vergleich zu einer Variante, die bestimmten "Umgebungsklassen" zu verwendende Schwellwerte und/oder Deaktivierungseigenschaften zuordnet. Es sei an dieser Stelle noch angemerkt, dass unter einer Deaktivierungseigenschaft letztlich eine Art "Flag" verstanden werden soll, das angibt, ob die Eigendiagnose an dem entsprechenden Ort deaktiviert werden soll oder nicht.

Zweckmäßigerweise kann die Positionsinformation eine aktuell befahrene Straße und/oder eine aktuell durchfahrene Umgebung beschreiben. Bereits die Art der Straße oder die durchfahrene Umgebung kann wichtige Anhaltspunkte dahingehend liefern, wie sich der aktuelle Betrieb des Kraftfahrzeugs hinsichtlich der Positionsinformation in den Sensordaten wiederspiegeln wird, so dass Eigendiagnosekriterien entsprechend angepasst werden können. Besonders zweckmäßig können dabei Straßenklassen und/oder sonstige Umgebungsklassen verwendet werden, beispielsweise eine den Straßentyp angebende Straßenklasse ("Innerorts", "Landstraße", "Autobahn", "Offroad" und dergleichen) oder auch eine relativ einfach definierte Umgebungsklasse, die angibt, ob das Kraftfahrzeug innerhalb oder außerhalb bebauter Bereiche, also innerorts oder außerorts, betrieben wird,

Besonders bevorzugt ist es dann, wenn aus einer Datenbank, insbesondere einer Look-Up-Tabelle, durch die Positionsinformation beschriebenen Straßenklassen und/oder sonstigen Umgebungsklassen zugeordnete Schwellwerte und/oder Deaktivierungseigenschaften das Überprüfungskriterium abgerufen und verwendet werden. Mithin ist es beispielsweise denkbar, Straßentypen unterschiedliche Schwellwerte zuzuordnen, innerorts andere Schwellwerte zu verwenden als außerorts, verschiedenen Ländern, in denen das Kraftfahrzeug betrieben wird, unterschiedliche Schwellwerte zuzuordnen und dergleichen, während es selbstverständlich auch im Rahmen der Erfindung liegt, mehrere Umgebungsklassen, umfassend insbesondere wenigstens eine Straßenklasse zu kombinieren, wobei den entsprechenden Kombinationen dann durchaus unterschiedliche Schwellwerte zugeordnet sein können.

In einem konkreten, vorteilhaften Beispiel kann vorgesehen sein, dass bei einem Objekte in seinem Erfassungsbereich detektierenden Umgebungssensor, insbesondere einen Radarsensor, als Schwellwert eine Zeitspanne und/oder wenigstens ein die Stärke zur weiteren Auswertung notwendiger Reflexionseigenschaften beschreibender Intensitätswert verwendet wird, wobei das Überprüfungskriterium überprüft, ob innerhalb der Zeitspanne wenigstens Objekte bestimmter Eigenschaften, insbesondere der erwähnten Reflexionseigenschaften, detektiert wurden. Wird ein Radarsensor beispielsweise hauptsächlich genutzt, um metallische Objekte zu detektieren, kann das Überprüfungskriterium ständig überwachen, wieviel Zeit seit der Detektion des letzten metallischen Objekts vergangen ist. Überschreitet diese Zeit die als Schwellwert verwendete Zeitspanne, wird von einem Defekt ausgegangen. Selbstverständlich ist es aber auch denkbar, allgemeiner alle durch den Radarsensor detektierten Objekte zu betrachten, so dass das Überprüfungskriterium dann überwacht, ob innerhalb der Zeitspanne wenigstens ein (dann beliebiges) Objekt detektiert wurde. Die Intensitätswerte, die Objekte als relevant kennzeichnen, bevorzugt aber die Zeitspanne, können nun in Abhängigkeit der Positionsinformation angepasst werden. Dabei kann beispielsweise vorgesehen sein, dass bei einem innerorts betriebenen Kraftfahrzeug eine niedrigere Zeitspanne gewählt wird als bei einem außerorts betriebenen Kraftfahrzeug und/oder die Länge der Zeitspanne abhängig von einem Staat, in dem das Kraftfahrzeug betrieben wird, gewählt wird. Innerhalb bebauten Terrains, also innerhalb einer Stadt bzw. eines Orts, kann üblicherweise davon ausgegangen werden, dass regelmäßig eine Vielzahl von relevanten Objekten detektiert wird, beispielsweise in Form von Laternenpfählen und/oder anderen Kraftfahrzeugen. Daher kann die Zeitspanne hier relativ kurz angesetzt werden, beispielsweise als nur 15 Minuten oder dergleichen. Außerorts existieren zwar ebenso andere Kraftfahrzeuge, Leitplanken und dergleichen, jedoch gegebenenfalls deutlich seltener, so dass die Länge der Zeitspanne hier deutlich erhöht werden kann, beispielsweise auf eine Stunde oder dergleichen. Es hat sich auch gezeigt, dass die Information, in welchem Land man sich befindet, einen Einfluss auf eine zweckmäßige Parametrierung von Überprüfungskriterien haben kann, nachdem beispielsweise in China, den USA und Indien eine große Anzahl von Straßen, insbesondere außerorts, existiert, welche durch eine eher einfache Konstruktion ohne Leitplanken und Beleuchtung auskommen, so dass mithin für eine längere Betriebszeit des Kraftfahrzeugs keine relevanten, insbesondere metallischen, Objekte durch einen Radarsensor detektiert werden können. Mithin ist es zweckmäßig, die Länge der Zeitspanne auch von dem Staat, in dem das Kraftfahrzeug betrieben wird, abhängig zu machen.

Allgemein, also unabhängig von der Verwendung eines Radarsensors oder eines sonstigen, Objekte detektierenden Sensors, kann es zweckmäßig sein, wenn die Eigendiagnose bei einer einen Betrieb außerhalb von Straßen anzeigenden Positionsinformation deaktiviert wird. Ein derartiger Betrieb, der auch als "Offroad"-Betrieb aufgefasst werden kann, liegt üblicherweise dann vor, wenn die aktuelle GNSS-Ortsangabe des Kraftfahrzeugs, insbesondere die GPS-Position, keinem Straßensegment in dem digitalen Kartenmaterial zugeordnet werden kann. Dann liegen letztendlich meist keine genaueren Informationen über die Umgebung um den aktuellen Ort des Kraftfahrzeugs vor, so dass eine verlässliche Parametrierung des Überprüfungskriteriums nicht sicher möglich ist. Mithin wird vorgezogen, die Eigendiagnose in solchen Fällen vorsichtshalber zu deaktivieren, um fehlerhaft als defekt diagnostizierte Umgebungssensoren zu vermeiden.

Neben dem Verfahren betrifft die Erfindung auch ein Kraftfahrzeug, aufweisend eine wenigstens einem Umgebungssensor des Kraftfahrzeugs zugeordnete, zur Durchführung des erfindungsgemäßen Verfahrens ausgebildete Steuereinrichtung. Bei der Steuereinrichtung kann es sich um ein Steuergerät und/oder eine Steuereinheit des Umgebungssensors selbst handeln. Sämtliche Ausführungen bezüglich des erfindungsgemäßen Verfahrens lassen sich analog auf das erfindungsgemäße Kraftfahrzeug übertragen, mit welchem mithin die bereits genannten Vorteile erhalten werden können.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: einen Ablaufplan eines Ausführungsbeispiels des erfindungsgemäßen Verfahrens, und
- Fig. 2: eine Prinzipskizze eines erfindungsgemäßen Kraftfahrzeugs.

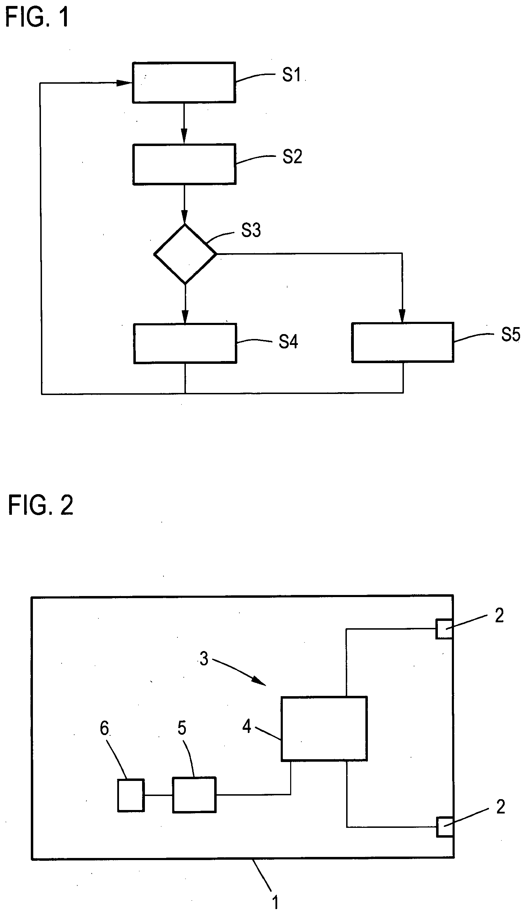

Fig. 1 zeigt einen Ablaufplan eines Ausführungsbeispiels des erfindungsgemäßen Verfahrens, welches eine Steuerung der Eigendiagnose eines hier als Radarsensor ausgebildeten Umfeldsensors betrifft. Zur Überprüfung der Funktionsfähigkeit des Radarsensors werden dessen Sensordaten dahingehend überwacht, dass im Rahmen eines Überprüfungskriteriums die Zeit, seitdem das letzte Mal ein relevantes, insbesondere metallisches, Objekt detektiert wurde, einen die Länge einer Zeitspanne beschreibenden Schwellwert überschreitet. Ist dies der Fall, wird von einem defekten Radarsensor ausgegangen. Nachdem die Erfüllung dieses Überprüfungskriteriums jedoch auch durch die durchfahrene Umgebung bedingt sein kann, sieht das Ausführungsbeispiel des erfindungsgemäßen Verfahrens hier eine Adaption des Schwellwertes oder gar eine zeitweise Deaktivierung der Eigendiagnose vor, welche im Übrigen durch eine Steuereinheit des Radarsensors selbst und/oder durch ein Steuergerät, an das der Radarsensor seine Daten liefert, durchgeführt werden kann.

In einem Schritt S1 werden den aktuellen Ort des Kraftfahrzeugs und mithin auch dessen aktuell durchfahrene Umgebung beschreibende Positionsinformationen ermittelt. Dazu wird zunächst die Ortsangabe eines GPS-Sensors des Kraftfahrzeugs abgerufen, so dass unter zusätzlicher Verwendung von in einem Navigationssystem des Kraftfahrzeugs vorliegendem digitalen Kartenmaterial zum einen festgestellt werden kann, auf einer Straße welcher Straßenklasse (als eine Art von Umgebungsklassen) das Kraftfahrzeug bewegt wird, zum anderen aber auch festgestellt werden kann, wenn sich das Kraftfahrzeug "Offroad" bewegt, mithin außerhalb des durch das digitale Kartenmaterial abgedeckten Straßennetzes. Die Information, ob sich das Kraftfahrzeug außerhalb von durch das digitale Kartenmaterial erfassten Straßen anzeigt, kann auch als eine Umgebungsklasse aufgefasst werden. Optional kann im Schritt S1 als Positionsinformation auch eine weitere Umgebungsklasse ermittelt werden, die angibt, in welchem Staat das Kraftfahrzeug gerade betrieben wird.

Die Positionsinformationen werden in einem Schritt S2 genutzt, um aus einer Datenbank einen aktuell zu verwendenden, die Länge der Zeitspanne definierenden Wert für das Überprüfungskriterium bzw. eine Deaktivierungseigenschaft abzurufen. Vorliegend ist die Ausgestaltung so gewählt, dass bei einem außerhalb von durch das digitale Kartenmaterial beschriebenen Straßen festgestellten Betrieb ("Offroad"-Betrieb) des Kraftfahrzeugs eine Deaktivierung der Eigendiagnose erfolgen soll, so dass in einem Schritt S3, in dem die gültige Deaktivierungseigenschaft überprüft wird, dann, wenn diese ein Deaktivieren fordert, in einem Schritt S4 die Eigendiagnose bis zu einer Änderung der Deaktivierungseigenschaft abgeschaltet wird.

Ansonsten, wenn die Deaktivierungseigenschaft also ein weiteres Durchführen der Eigendiagnose anzeigt, wird in einem Schritt S5 das Überprüfungskriterium mit dem zu verwendenden Schwellwert parametriert.

Dieses Verfahren wird kontinuierlich bzw. in kurzen Zeitabständen zyklisch durchgeführt, um immer eine aktuell gültige Parametrierung bzw. die aktuell gültige Deaktivierungseigenschaft zu verwenden.

Fig. 2 zeigt eine Prinzipskizze eines erfindungsgemäßen Kraftfahrzeugs 1, welches vorliegend als gezeigte Umgebungssensoren zwei Radarsensoren 2, die auf das Vorfeld des Kraftfahrzeugs 1 gerichtet sind, aufweist. Selbstverständlich können auch weitere Umgebungssensoren, beispielsweise Kameras, Ultraschallsensoren und dergleichen innerhalb des Kraftfahrzeugs 1 vorgesehen sein, deren die eigenen Sensordaten auswertenden Eigendiagnose-Überprüfungskriterien selbstverständlich entsprechend dynamisch anhand der aktuellen Positionsinformation angepasst werden können.

Als Steuereinrichtung 3, die zur Durchführung des erfindungsgemäßen Verfahrens ausgebildet ist, beispielsweise des bezüglich der Fig. 1 dargestellten Verfahrens, ist vorliegend ein Steuergerät 4 gezeigt, das Sensordaten der Radarsensoren 2 entgegennimmt. Das Steuergerät 4 hat ferner Zugriff auf ein Navigationssystem 5 des Kraftfahrzeugs 1, in dem digitales Kartenmaterial vorliegt, sowie einen beispielsweise dem Navigationssystem 5 zugeordneten, hier als GPS-Sensor ausgebildeten Ortssensor 6.

## Patentansprüche

1. Verfahren zur Eigendiagnose eines Umgebungssensors eines Kraftfahrzeugs (1) während dessen Betrieb, wobei von dem Umgebungssensor aufgenommene Sensordaten gegen wenigstens ein eine korrekte Funktionsweise anzeigendes, wenigstens einen Schwellwert verwendendes Überprüfungskriterium geprüft werden,
**dadurch gekennzeichnet,**
**dass** durch eine Steuereinrichtung (3) in Abhängigkeit wenigstens einer eine aktuelle Umgebung des Kraftfahrzeugs (1) beschreibenden Positionsinformation wenigstens ein Schwellwert des Überprüfungskriteriums während der Fahrt dynamisch angepasst und/oder die Eigendiagnose zeitweise unterbrochen wird, wobei eine Ortsangabe durch einen Ortssensor (6) eines globalen Navigationssatellitensystems ermittelt wird, wobei die Positionsinformation aus in dem Kraftfahrzeug (1) vorliegendem digitalen Kartenmaterial, insbesondere eines Navigationssystems (5), unter Verwendung der Ortsangabe abgeleitet wird.

2. Verfahren nach Anspruch 1,
**dadurch gekennzeichnet,**
**dass** an bestimmten Orten zu verwendende Schwellwerte und/oder Deaktivierungseigenschaften in dem digitalen Kartenmaterial, insbesondere Straßenabschnitten und/oder Bereichen zugeordnet, gespeichert sind.

3. Verfahren nach einem der vorangehenden Ansprüche,
**dadurch gekennzeichnet,**
**dass** die Positionsinformation eine aktuell befahrene Straße und/oder eine aktuell durchfahrene Umgebung beschreibt.

4. Verfahren nach Anspruch 3,
**dadurch gekennzeichnet,**
**dass** aus einer Datenbank, insbesondere einer Look-Up-Tabelle, durch die Positionsinformation beschriebenen Straßenklassen und/oder sonstigen Umgebungsklassen zugeordnete Schwellwerte und/oder Deaktivierungseigenschaften für das Überprüfungskriterium abgerufen und verwendet werden.

5. Verfahren nach einem der vorangehenden Ansprüche,
**dadurch gekennzeichnet,**
**dass** bei einem Objekte in seinem Erfassungsbereich detektierenden Umgebungssensor, insbesondere einem Radarsensor (2), als Schwellwert eine Zeitspanne und/oder wenigstens ein die Stärke zur weiteren Auswertung notwendiger Reflexionseigenschaften beschreibender Intensitätswert verwendet wird, wobei das Überprüfungskriterium überprüft, ob innerhalb der Zeitspanne wenigstens Objekte bestimmter Eigenschaften detektiert wurden.

6. Verfahren nach Anspruch 5,
**dadurch gekennzeichnet,**
**dass** bei einem innerorts betriebenen Kraftfahrzeug (1) eine niedrigere Zeitspanne gewählt wird als bei einem außerorts betriebenen Kraftfahrzeug (1) und/oder die Länge der Zeitspanne abhängig von einem Staat, in dem das Kraftfahrzeug (1) betrieben wird, gewählt wird.

7. Verfahren nach einem der vorangehenden Ansprüche,
**dadurch gekennzeichnet,**
**dass** die Eigendiagnose bei einer einen Betrieb außerhalb von Straßen anzeigenden Positionsinformation deaktiviert wird.

8. Kraftfahrzeug (1), aufweisend eine wenigstens einem Umgebungssensor des Kraftfahrzeugs (1) zugeordnete, zur Durchführung eines Verfahrens nach einem der vorangehenden Ansprüche ausgebildete Steuereinrichtung (3).

## Claims

1. Method for self-diagnosis of an ambient sensor on a motor vehicle (1) during the operation thereof, wherein sensor data acquired by the ambient sensor are checked against at least one test criterion that indicates proper functioning and uses at least one threshold value, **characterised in that** by means of a control device (3) at least one threshold value of the test criterion is dynamically adjusted as the motor vehicle (1) drives and/or the self-diagnosis is temporarily interrupted in dependence on at least one piece of positional information describing a current environment of the motor vehicle, wherein the location information is determined by a location sensor (6) of a global navigation satellite system, wherein the piece of positional information is derived from digital map material available in the motor vehicle (1), in particular of a navigation system (5), using the location information.

2. Method according to claim 1, **characterised in that** threshold values and/or deactivation properties to be used at specific locations are stored in the digital map material, in particular, associated with road sections or regions.

3. Method according to any one of the preceding claims **characterised in that** the piece of positional information describes a currently trafficked road and/or a currently traversed environment.

4. Method according to claim 3, **characterised in that** threshold values and/or deactivation properties associated with described road classes and/or other environment classes are retrieved by means of the piece of positional information from a data base, in particular a look-up table, and are used for the test criterion.

5. Method according to any one of the preceding claims, **characterised in that** in the case of an ambient sensor detecting objects in its detection range, in particular, a radar sensor (2) a time span and/or at least an intensity value describing the intensity for the further evaluation of necessary reflection properties is used as a threshold value, wherein the test criterion checks whether at least objects of specific properties were detected within the time span.

6. Method according to claim 5, **characterised in that** in the case of a motor vehicle (1) operated within city limits a shorter time span is selected than in the case of a motor vehicle (1) operated in rural areas and/or the length of the time span is selected depending on a country, in which the motor vehicle (1) is operated.

7. Method according to any one of the preceding claims **characterised in that** the self-diagnosis is deactivated in the case of a piece of positional information indicating an operation outside the road network.

8. Motor vehicle (1), having a control device (3) associated at least with one ambient sensor of the motor vehicle (1), which is designed for implementing a method according to any one of the preceding claims.

## Revendications

1. Procédé d'auto-diagnostic d'un capteur d'environnement d'un véhicule automobile (1) pendant son exploitation, dans lequel des données de capteur enregistrées par le capteur d'environnement sont contrôlées par rapport à au moins un critère de vérification indiquant un bon fonctionnement, utilisant au moins une valeur de seuil,
**caractérisé en ce**
**qu'**au moins une valeur de seuil du critère de vérification est adaptée de manière dynamique pendant la conduite par un dispositif de commande (3) en fonction d'au moins une information de position décrivant un environnement instantané du véhicule automobile (1), et/ou l'auto-diagnostic est interrompu par intermittence,
dans lequel une indication de lieu est déterminée par un capteur de localisation (6) d'un système mondial de navigation par satellite, dans lequel l'information de position est déduite d'un matériel cartographique numérique disponible dans le véhicule automobile (1), en particulier d'un système de navigation (5), en utilisant l'indication de lieu.

2. Procédé selon la revendication 1,
**caractérisé en ce**
**que** des valeurs de seuil et/ou des propriétés de désactivation à utiliser dans des lieux définis sont mémorisées dans le matériel cartographique numérique, en particulier en étant associées à des tronçons de route et/ou des zones.

3. Procédé selon l'une quelconque des revendications précédentes,
**caractérisé en ce**
**que** l'information de position décrit une route empruntée instantanément et/ou un environnement traversé instantanément.

4. Procédé selon la revendication 3,
**caractérisé en ce**
**que** sont appelées depuis une base de données, en particulier une table de correspondance, et sont utilisées pour le critère de surveillance des valeurs de seuil et/ou des propriétés de désactivation associées à des types de route décrits par l'information de position et/ou à d'autres types d'environnement.

5. Procédé selon l'une quelconque des revendications précédentes,
**caractérisé en ce**
**qu'**une période et/ou au moins une valeur d'intensité décrivant l'amplitude aux fins de l'évaluation ultérieure de propriétés de réflexion nécessaires sont utilisées dans pour un capteur d'environnement détectant dans sa zone de détection des objets, en particulier un capteur radar (2), en tant que valeur de seuil, dans lequel le critère de vérification vérifie si au moins des objets de propriétés définies ont été détectés dans la période.

6. Procédé selon la revendication 5,
**caractérisé en ce**
**qu'**est choisie, pour un véhicule automobile (1) exploité dans les localités, une période plus petite que pour un véhicule automobile (1) exploité en dehors des localités et/ou la longueur de la période est choisie en fonction d'un Etat, dans lequel le véhicule automobile (1) est exploité.

7. Procédé selon l'une quelconque des revendications précédentes,
**caractérisé en ce**
**que** l'auto-diagnostic est désactivé pour une information de position indiquant une exploitation en dehors de routes.

8. Véhicule automobile (1) présentant un dispositif de commande (3), associé à au moins un capteur d'environnement du véhicule automobile (1), réalisé pour mettre en oeuvre un procédé selon l'une quelconque des revendications précédentes.
